# DEMANDE DE BREVET EUROPEEN

(11) **EP 3 339 389 A1**
(43) Date de publication de la demande: **27.06.2018**
(21) Numéro de dépôt: 17208310.7
(22) Date de dépôt: 19.12.2017
(51) Int. Cl.: C09J 7/38, C09J 7/22, C09J 7/24, C09J 7/26

(54) **ETIQUETTE POUR POCHE À SANG ET POCHE À SANG MUNIE D'UNE TELLE ÉTIQUETTE**

(30) Priorité: 21.12.2016 FR 1662999
(71) Demandeur: ADHEX TECHNOLOGIES, 21300 Chenôve (FR)
(72) Inventeur: WILLIAMS, Maud, 21000 DIJON (FR); DUFOUR, Andrée-Noëlle, 21220 GEVREY CHAMBERTIN (FR); MATRAY, Julie, 21300 CHENOVE (FR); PERRIN, Christine, 21000 DIJON (FR)
(74) Mandataire: Gevers SA

(57) **Abrégé**

La présente invention concerne une étiquette adhésive destinée à être solidarisée sur une poche à sang en PVC, en kraton, en polypropylène ou similaire, ladite étiquette adhésive comprenant un support flexible et une couche d'adhésif sensible à la pression déposée sur l'une des faces dudit support ; ladite étiquette est remarquable en ce que ledit support présente un taux de charges minérales de silice et/ou de carbonate de calcium (CaCO3) et/ou similaire inférieur à 50%, en ce que le support présente à 115°C un allongement supérieur ou égal à 2% lorsqu'une éprouvette de 1,5 cm de large dudit support est suspendue et mise sous tension par un poids de 375 g pendant 75 minutes et en ce que ladite poche à sang présente à 115°C un allongement d'au moins 100% lorsqu'une éprouvette de 1,5 cm de large d'une poche à sang est suspendue et mise sous tension par un poids de 375 g pendant 75 minutes.

## Description

La présente invention se rapporte à une étiquette pour poche à sang et à une poche à sang munie d'une telle étiquette. L'invention concerne plus particulièrement à une étiquette pour poche à sang évitant l'apparition de défauts du type liserés, plis, peau d'orange et « tunnelling » lorsque la poche à sang est stérilisée.

Dans le domaine du traitement du sang, il est bien connu de stocker les composants sanguins dans des récipients en matière plastique souple communément appelés poche à sang. Lesdites poches à sang sont usuellement obtenues dans un film souple en polychlorure de vinyle (PVC) comprenant un plastifiant, généralement du phtalate de di-2-éthylhexyle communément appelé DEHP selon l'acronyme anglo-saxon « DiEthylHexyl Phthalate ».

Afin de permettre une identification de certaines informations sur ladite poche à sang telles que le composant sanguin, la date de collecte, le code produit et le lot numéro de fabrication, etc., il est bien connu de fournir des étiquettes pour les poches de sang, lesdites informations étant notamment représentées par un code barre ou similaire.

Initialement, lesdites étiquettes étaient obtenues dans du papier. Toutefois, ces étiquettes en papier présentaient l'inconvénient de ne pas être suffisamment résistantes et de ne pas permettre la transmission de gaz.

En effet, il est connu de traiter les composants sanguins stockés dans les poches à sang en les centrifugeant. Avant toute utilisation, les poches à sang sont stérilisées par un procédé de stérilisation en autoclave, par exemple, qui est le procédé de stérilisation le plus couramment utilisé. Au cours de ces procédés, les étiquettes peuvent être mouillées et soumises à des températures extrêmes, plus de 100°C lors de la stérilisation notamment. Les étiquettes de papier peuvent alors se fissurer ou se froisser lors de ces processus. La fissuration ou le froissement d'une étiquette peut rendre le code barre de l'étiquette illisible par un lecteur de code à barres, forçant alors un opérateur à une saisie manuelle des données dans un ordinateur, voire à la rendre illisible, ce qui a pour conséquence d'augmenter le risque d'erreurs. Les étiquettes peuvent également se décoller totalement ou partiellement lors de la stérilisation, ce qui entraîne un risque de perte des données.

Par ailleurs, les poches à sang doivent permettre la transmission de gaz à travers la poche afin de maintenir la viabilité des cellules du sang qui y est stocké. À cet égard, il est nécessaire que la poche autorise le dioxyde de carbone à s'échapper hors de la poche à sang et de permettre le passage de l'oxygène à l'intérieur de la poche.

Afin de remédier aux inconvénients des étiquettes en papier pour les poches à sang, on a déjà imaginé des étiquettes en matière synthétique faciles à imprimer, résistantes aux conditions de stérilisation et permettant les échanges gazeux avec le contenu des poches à sang. C'est le cas du brevet américain US 5,314,421 et de la demande de brevet européen EP 2 806 004 notamment.

Le document US 5,314,421 décrit une étiquette pour poche à sang comprenant un film plastique microporeux comprenant une matrice de pores interconnectés pour permettre à un gaz de pénétrer dans la poche à sang et de s'en échapper en passant par une zone étiquetée. Ladite étiquette comprend un adhésif sensible à la pression sur une surface de fond afin de permettre d'écrire sur l'étiquette. Par ailleurs, les pores permettent à de l'encre d'être absorbée au moins sur une surface extérieure de l'étiquette pour permettre l'écriture sur l'étiquette, et notamment l'écriture d'un code barre. Plus particulièrement, le film plastique microporeux consiste en un film en polyoléfine microporeux commercialisé sous la marque Teslin par la société PPG Industries.

Le document EP 2 806 004 décrit également une étiquette pour poche à sang comprenant un support flexible et une couche d'adhésif sensible à la pression déposée sur l'une des faces dudit support. Ledit support est constitué d'un film en polypropylène d'une épaisseur de 80 µm et l'adhésif est obtenu à partir d'une résine à base de polyester comprenant un polyester amorphe qui présente une température de transition vitreuse comprise entre -30°C et 7°C et d'un agent de réticulation.

Ces étiquettes pour poche à sang, bien que plus résistantes que les étiquettes en papier, présentent l'inconvénient de procurer des défauts de surface du type liserés, plis, peau d'orange et « tunnelling » lorsque la poche à sang est stérilisée, rendant lesdites étiquettes illisibles pour un lecteur de codes barre. On entend par « tunnelling » un pli important de l'étiquette qui forme alors une espèce de tunnel.

On connait également le document US2016/0319164 qui décrit une étiquette en polypropylène pour poche à sang dans laquelle l'étiquette est obtenue dans un film de polypropylène microporeux, avec une porosité comprise entre 2500 et 4771 Gurley secondes, et dans laquelle le film de polypropylène présente un retrait de moins de 2% dans la direction de la machine et de 4 à 6% dans la direction transversale après une exposition à une température de 121 ° C pendant 30 minutes. Lors de l'exposition à des conditions de stérilisation, l'étiquette présente des caractéristiques de retrait qui correspondent étroitement aux caractéristiques de retrait de la poche à sang.

Toutefois, ces étiquettes ne permettent pas de diminuer suffisamment les défauts de surface du type liserés, plis, peau d'orange et « tunnelling » lorsque la poche à sang est stérilisée .

L'un des buts de l'invention est donc de remédier à ces inconvénients en proposant une étiquette pour poche à sang et une poche à sang munie d'une telle étiquette de conception simple et peu onéreuse et permettant de supprimer, et pour le moins de fortement limiter, l'apparition de défauts de surface du type liserés de masse adhésive sur la périphérie de l'étiquette ou résidus de masse, plis, peau d'orange et « tunnelling » lorsque la poche à sang est stérilisée.

A cet effet et conformément à l'invention, il est proposé une étiquette adhésive destinée à être solidarisée sur une poche à sang, ladite étiquette adhésive comprenant un support flexible et une couche d'adhésif sensible à la pression déposée sur l'une des faces dudit support ladite étiquette est remarquable en ce que ledit support présente un taux de charges minérales de silice et/ou de carbonate de calcium (CaCo3) et/ou similaire inférieur à 50%, en ce que le support présente à 115°C un allongement supérieur ou égal à 2% lorsqu'une éprouvette de 1,5 cm de large dudit support est suspendue et mise sous tension par un poids de 375 g pendant 75 minutes et ce que ladite poche à sang présente à 115°C un allongement d'au moins 100% lorsqu'une éprouvette de 1,5 cm de large d'une poche à sang est suspendue et mise sous tension par un poids de 375 g pendant 75 minutes.

De préférence, le ratio entre l'allongement du support et l'allongement de la poche à sang est compris entre 0,01 et 0,5 ou supérieur ou égal à 2,5.

De manière avantageuse, afin de permettre les échanges gazeux entre l'intérieur et l'extérieur de la poche à sang, le support consiste en un film plastique microporeux comprenant une matrice de pores interconnectés.

Ledit film plastique est obtenu à partir de polypropylène et/ou de polyéthylène.

Par ailleurs, la couche adhésive sensible à la pression présente un pouvoir adhésif à 180° sur verre supérieur à 200 cN/cm et, de préférence, compris entre 900 et 1000 cN/cm, ledit le pouvoir adhésif sur verre étant déterminé par la norme AFERA 5001 méthode A.

Un autre objet de l'invention concerne une poche à sang munie d'une étiquette adhésive comprenant un support flexible et une couche d'adhésif sensible à la pression déposée sur l'une des faces dudit support; ladite poche à sang est remarquable ce que ledit support présente à 115°C un allongement supérieur ou égal à 2% lorsqu'une éprouvette de 1,5 cm de large dudit support est suspendue et mise sous tension par un poids de 375 g pendant 75 minutes et ce que ladite poche à sang présente à 115° un allongement d'au moins 100% lorsqu'une éprouvette de 1,5 cm de large d'une poche à sang est suspendue et mise sous tension par un poids de 375 g pendant 75 minutes.

D'autres avantages et caractéristiques ressortiront mieux de la description qui va suivre, d'une unique variante d'exécution, donnée à titre d'exemple non limitatif, de l'étiquette pour poche à sang et de la poche à sang munie d'une telle étiquette suivant l'invention, à partir des dessins annexés sur lesquels :
- la figure 1 est une vue en perspective d'une poche à sang munie d'une étiquette conforme à l'invention,
- la figure 2 est une vue en élévation d'une poche à sang munie d'une étiquette conforme à l'invention,
- la figure 3 est une représentation schématique de côté du test d'allongement d'une étiquette conforme à l'invention.

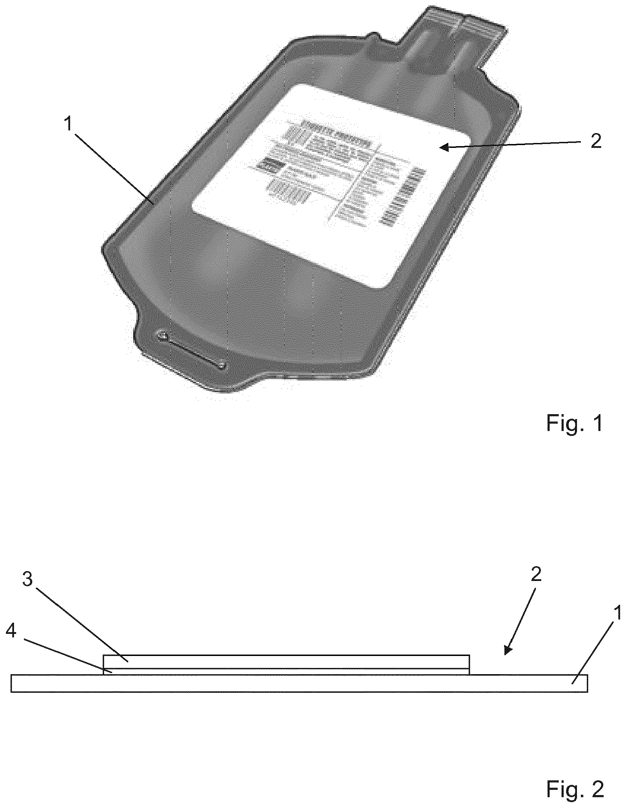

En référence aux figures 1 et 2, la poche à sang 1 comporte une étiquette adhésive 2 suivant l'invention. La poche à sang 1 constitue un contenant pour recevoir et stocker des composants sanguins et est obtenue à partir d'un film souple en polychlorure de vinyle (PVC) incluant du phtalate de di-2-éthylhexyle communément appelé DEHP comme plastifiant, ledit film étant par exemple un film de PVC commercialisé par la société Renolit® sous la référence 3222.

Il est bien évident que la poche à sang pourra consister dans toute autre poche à sang en PVC, en kraton® ou en polypropylène par exemple, bien connue de l'homme du métier sans pour autant sortir du cadre de l'invention. Il est bien évident que la poche à sang pourra être obtenu dans tout type de kraton® bien connu de l'homme du métier.

L'étiquette 2 suivant l'invention est solidarisée sur la poche à sang pour permettre une identification du contenu de cette dernière, ladite étiquette 2 étant imprimée sur sa face supérieure, l'impression consistant notamment en un code barre, pour ce faire. Ladite étiquette 2 est constituée d'un support 3 flexible et d'une couche d'adhésif sensible à la pression 4 déposée sur la face inférieure dudit support 3. Par exemple, le support 3 pourra consister en un film monocouche ou un film multicouches obtenu au moyen d'un procédé d'extrusion bien connu de l'homme du métier. Le support 3 pourra, par exemple, consister en un film multicouche à 3 couches qui comportera avantageusement une couche contenant des charges minérales telle que de la silice et/ou du dioxyde de titane (TiO₂) et/ou du carbonate de calcium (CaCO₃) et/ou similaire, le taux de charges minérales étant inférieur à 50%, sur sa face externe pour faciliter l'impression et la tenue des encres, la couche centrale pouvant comporter des colorants et assurant la fonction de tenue mécanique de l'étiquette. Les épaisseurs des différentes couches du film multicouche pourront être différentes, avec une épaisseur de la couche centrale généralement supérieure à celle de couches périphériques.

On notera que le taux de charges minérales, inférieur à 50%, est déterminé sur le poids total du film monocouche ou multicouche formant le support 3. Ainsi, le taux de charges minérales correspond au poids des charges minérales divisé par le poids total du film formant le support 3. Dans l'hypothèse, d'un film multicouches, les charges minérales seront de préférence contenues dans la couche externe du film formant le support 3 afin d'améliorer l'impression sur ledit film. Toutefois, il est bien évident que les charges minérales pourront être contenues dans l'une et/ou l'autre des couches du film formant le support 3 sans pour autant sortir du cadre de l'invention.

Afin de permettre les échanges gazeux entre l'intérieur et l'extérieur de la poche à sang, le support 3 pourra consister en un film plastique microporeux comprenant une matrice de pores interconnectés. Ledit film plastique est obtenu dans du polypropylène ou dans du polyéthylène ou dans tout autre matériau bien connu de l'homme du métier présentant les mêmes caractéristiques.

Par ailleurs, la couche d'adhésif sensible à la pression 4 est choisie parmi les masses adhésives sensibles à la pression procurant les échanges gazeux et déposée, de préférence, avec un grammage compris entre 25 g/m² et 75 g/m², de préférence de 30 à 50 g/m². Par ailleurs, la couche adhésive sensible à la pression présente un pouvoir adhésif à 180° sur verre supérieur à 200 cN/cm et, de préférence, compris entre 900 et 1000 cN/cm. Par exemple, l'adhésif consiste dans l'adhésif commercialisé par la société Avery Dennison Materials Europe GmbH, Sonnenwiesenstrasse 18, 8280 Kreuzlingen (TG), Suisse sous la référence Polytex® SP2020. On notera que le le pouvoir adhésif sur verre est déterminé par la norme AFERA 5001 méthode A.

Par ailleurs, de manière particulièrement avantageuse, ledit support présente à 115°C un allongement supérieur ou égal à 2% lorsqu'une éprouvette de 1,5 cm de large dudit support est suspendue et mise sous tension par un poids de 375 g pendant 75 minutes et ce que ladite poche à sang présente à 115°C un allongement d'au moins 100% lorsqu'une éprouvette de 1,5 cm de large d'une poche à sang est suspendue et mise sous tension par un poids de 375 g pendant 75 minutes. De plus, le ratio entre l'allongement du support 3 et l'allongement de la poche à sang est avantageusement compris entre 0,01 et 0,5 ou supérieur ou égal à 2,5

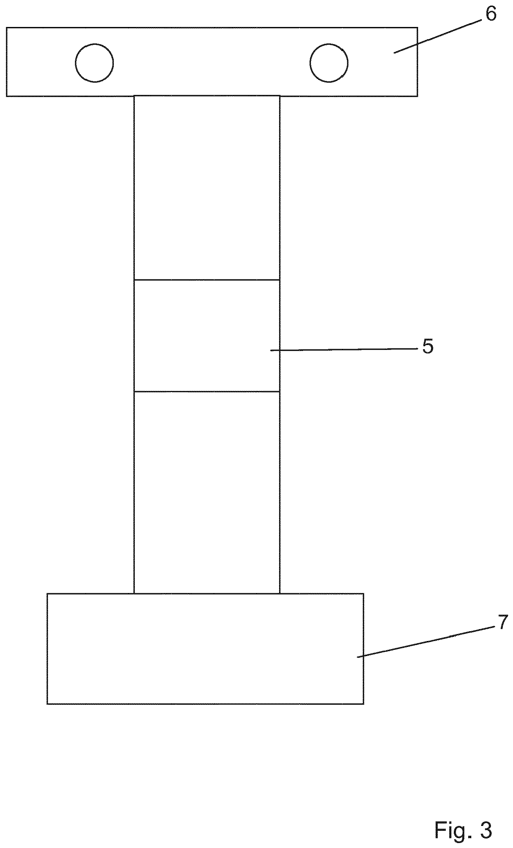

Le protocole de mesure de l'allongement du support et de la poche à sang est représenté sur la figure 3. Il consiste à réaliser des éprouvettes 5 du support 3 à l'aide d'un emporte-pièce, à fixer lesdites éprouvettes 5 sur un support 6 et à solidariser à l'extrémité inférieure des éprouvettes 5 un poids 7 de 350 grammes (+25 grammes de pince fixante). Les éprouvettes 5 sont rectangulaires et présentent des dimensions de 1,5 cm de large. Deux traits transversaux parallèles, séparés d'une distance de 2 cm par exemple, sont réalisés sur les éprouvettes. L'ensemble est alors positionné dans une étuve, non représentée sur les figures, dans laquelle la température est portée à 115°C, qui correspond sensiblement à la température de stérilisation d'un autoclave, pendant une durée de 75 minutes puis la distance entre les deux traits transversaux est mesurée afin de calculer l'allongement en pourcentage du support après passage en stérilisation.

L'allongement du support 3 supérieur ou égal à 2% et le ratio entre l'allongement du support 3 et l'allongement de la poche à sang compris entre 0,01 et 0,5 ou supérieur ou égal à 2,5 permettent d'éviter, et pour le moins de limiter, l'apparition de défauts de surface du type liserés, plis, peau d'orange et « tunnelling » lorsque la poche à sang est stérilisée.

### Exemple :

Une étiquette est réalisée à partir d'un support obtenu dans un film en polypropylène commercialisé par la société RKW sous la référence FPO ® Film 407 White 407-11 SA233CF et sur lequel est déposée une masse adhésive commercialisée par la société Avery Dennison Materials Europe GmbH sous la référence Polytex SP2020 avec un grammage de 50 g/m2. L'étiquette est positionnée sur une poche à sang fabriquée à partir d'un film PVC commercialisé par la société Renolit® sous la référence 3222. L'allongement du support 3 de l'étiquette est supérieur ou égal à 300% selon le protocole de mesure décrit précédemment et le ratio entre l'allongement du support 3 et l'allongement de la poche à sang est supérieur ou égal à 2,5 dans le sens transversal. L'ensemble poche à sang-étiquette est stérilisé à 115°C pendant 30 minutes dans une étuve. Le pouvoir adhésif (PA) à 180° sur verre est de 940 cN/cm et, après un mois à 40°C, est de 790 cN/cm. Après stérilisation, l'étiquette présente une adhérence de 2660 cN/5cm et, après stérilisation et 8 jours à 60°C, l'étiquette présente une adhérence de 1260 cN/5cm. L'aspect de l'étiquette sur la poche à sang, après la stérilisation, est quasiment inchangé. En effet, l'étiquette ne présente qu'un seul pli de très faible épaisseur qui n'altère pas la lecture du code barre ou des autres éléments d'information imprimés sur ladite étiquette.

Dans cet exemple, l'élongation du support FPO ® Film 407 White 407-11 SA233CF lorsqu'une éprouvette de 1,5 cm de large dudit support est suspendue et mise sous tension par un poids de 375 g pendant 75 minutes à 115°C est supérieur ou égal à 300 % et l'élongation dudit support sur lequel est déposé la couche d'adhésif sensible à la pression Polytex SP2020 présente dans les mêmes conditions un allongement supérieur ou égal à 300%.

En comparaison, une étiquette réalisée à partir d'un support obtenu dans un film en polyéthylène dit Teslin commercialisé par la société Baxter et sur lequel est déposée une masse adhésive commercialisée par AVERY sous la référence POLYTEX 7011 avec un grammage de 50 g/m2, est positionnée sur une poche à sang fabriquée à partir d'un film PVC contenant un plastifiant DEHP qui est stérilisée à 121°C pendant 30 minutes dans une étuve. Le film en Teslin formant le support de l'étiquette présente un taux de charges minérales supérieur ou égal à 50%. Par ailleurs, l'élongation du support en Teslin lorsqu'une éprouvette de 1,5 cm de large dudit support est suspendue et mise sous tension par un poids de 375 g pendant 75 minutes à 115°C est de 145%. Après stérilisation, l'étiquette présente une adhérence de 3210 cN/5cm et, après stérilisation et 8 jours à 60°C, l'étiquette présente une adhérence de 1900 cN/5cm (rupture adhésive). L'aspect de l'étiquette sur la poche à sang, après la stérilisation, est profondément modifié. En effet, l'étiquette présente des plis et un liseré de masse adhésive qui sont susceptibles d'altérer la lecture du code barre ou des autres éléments d'information imprimés sur ladite étiquette notamment.

On observera que le film de la poche à sang 2 présente usuellement une épaisseur comprise entre 100 et 500 µm, que le support d'étiquette 3 présente usuellement une épaisseur comprise 100 et 3000 µm et que la couche d'adhésif sensible à la pression 4 présente généralement une épaisseur comprise entre 5 et 50 µm ; toutefois, l'épaisseur du film de la poche à sang 2, du support d'étiquette 3 et de la couche d'adhésif sensible à la pression 4 n'ont aucune incidence. Ainsi, l'étiquette 3 et la poche à sang 2 peuvent avoir une épaisseur quelconque dès lors que les caractéristiques d'allongement, telles que décrites précédemment, sont bien respectées.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Etiquette adhésive destinée à être solidarisée sur une poche à sang en PVC, en kraton, en polypropylène ou similaire, ladite étiquette adhésive comprenant un support flexible et une couche d'adhésif sensible à la pression déposée sur l'une des faces dudit support, ***caractérisée* en ce que** ledit support présente un taux de charges minérales de silice et/ou de carbonate de calcium (CaCO₃) et/ou similaire inférieur à 50%, **en ce que** le support présente à 115°C un allongement supérieur ou égal à 2% lorsqu'une éprouvette de 1,5 cm de large dudit support est suspendue et mise sous tension par un poids de 375 g pendant 75 minutes et **en ce que** ladite poche à sang présente à 115°C un allongement d'au moins 100% lorsqu'une éprouvette de 1,5 cm de large d'une poche à sang est suspendue et mise sous tension par un poids de 375 g pendant 75 minutes.

2. Etiquette adhésive suivant la revendication 1 **caractérisée en ce que** le ratio entre l'allongement du support et l'allongement de la poche à sang est compris entre 0,01 et 0,5 ou supérieur ou égal à 2,5.

3. Etiquette adhésive suivant l'une quelconque des revendications 1 ou 2 **caractérisée en ce que** le support consiste en un film plastique microporeux comprenant une matrice de pores interconnectés.

4. Etiquette adhésive suivant la revendication 3 **caractérisée en ce que** le film plastique est obtenu à partir de polypropylène.

5. Etiquette adhésive suivant l'une quelconque des revendications 3 ou 4 **caractérisée en ce que** le film plastique est obtenu à partir de polyéthylène.

6. Etiquette adhésive suivant la revendication 5 ***caractérisée* en ce que** le film plastique est obtenu à partir de polypropylène et de polyéthylène.

7. Etiquette adhésive suivant l'une quelconque des revendications 1 à 6 **caractérisée en ce que** la couche adhésive sensible à la pression présente un pouvoir adhésif à 180° sur verre supérieur à 200 cN/cm.

8. Etiquette adhésive suivant la revendication 7 **caractérisée en ce que** la couche adhésive présente un pouvoir adhésif à 180° sur verre compris entre 900 et 1000 cN/cm.

9. Poche à sang munie d'une étiquette adhésive comprenant un support flexible et une couche d'adhésif sensible à la pression déposée sur l'une des faces dudit support, ladite poche à sang étant obtenue en PVC, en kraton, en polypropylène ou similaire, ***caractérisée* en ce que** ledit support comporte un taux de charges minérales de silice et/ou de carbonate de calcium (CaCO₃) et/ou similaire inférieur à 50%, **en ce que** le support présente à 115°C un allongement supérieur ou égal à 2% lorsqu'une éprouvette de 1,5 cm de large dudit support est suspendue et mise sous tension par un poids de 375 g pendant 75 minutes et ce que ladite poche à sang présente à 115°C un allongement d'au moins 100% lorsqu'une éprouvette de 1,5 cm de large d'une poche à sang est suspendue et mise sous tension par un poids de 375 g pendant 75 minutes.

10. Poche à sang suivant la revendication 9 **caractérisée en ce que** le ratio entre l'allongement du support et l'allongement de la poche à sang est compris entre 0,01 et 0,5 ou supérieur ou égal à 2,5.

11. Poche à sang suivant la revendication 10 **caractérisée en ce que** le support consiste en un film plastique microporeux comprenant une matrice de pores interconnectés.

12. Poche à sang suivant la revendication 11 **caractérisée en ce que** le film plastique est obtenu à partir de polypropylène.

13. Poche à sang suivant l'une quelconque des revendications 11 ou 12 **caractérisée en ce que** le film plastique est obtenu à partir de polyéthylène.

14. Poche à sang suivant la revendication 13 **caractérisée en ce que** le film plastique est obtenu à partir de polypropylène et de polyéthylène.

15. Poche à sang suivant la revendication 15 **caractérisée en ce que** la couche adhésive présente un pouvoir adhésif à 180° sur verre compris entre 900 et 1000 cN/cm.
